# EUROPÄISCHE PATENTSCHRIFT

(11) **EP 3 492 828 B1**
(45) Veröffentlichungstag und Bekanntmachung des Hinweises auf die Patenterteilung: **24.02.2021**
(21) Anmeldenummer: 18206978.1
(22) Anmeldetag: 19.11.2018
(51) Int. Cl.: F24F 11/00, G01C 21/34, G05B 15/02

(54) **VERFAHREN UND VORRICHTUNG ZUM EINSTELLEN EINES ZEITPROGRAMMS EINES HEIZSYSTEMS UND/ODER EINES ZEITPROGRAMMS EINES SYSTEMS ZUR HAUSAUTOMATION**
METHOD AND APPARATUS FOR ADJUSTING THE TIMING OF A HEATING SYSTEM AND/OR A HOME AUTOMATION TIMING SYSTEM
PROCÉDÉ ET DISPOSITIF DE RÉGLAGE D'UN PROGRAMME DE TEMPORISATION D'UN SYSTÈME DE CHAUFFAGE ET / OU D'UN PROGRAMME DE TEMPORISATION D'UN SYSTÈME D'AUTOMATISATION DOMESTIQUE

(30) Priorität: 29.11.2017 DE 102017221382; 29.11.2017 DE 102017221377
(43) Veröffentlichungstag der Anmeldung: 05.06.2019
(73) Patentinhaber: Robert Bosch GmbH, 70442 Stuttgart (DE)
(72) Erfinder: Dragt, Jorick, 7513 ZA Enschede (NL); Reiss, Attila, 71277 Rutesheim (DE)

(56) Entgegenhaltungen:
- US-A1- 2011 231 091
- US-A1- 2017 285 596
- US-B1- 8 825 383

## Beschreibung

Die Erfindung betrifft ein Verfahren zum Einstellen eines Zeitprogramms eines Heizsystems und/oder eines Zeitprogramms eines Systems zur Hausautomation. Die Erfindung betrifft auch ein Computerprogramm, das zum Ausführen einer Ausführungsform des Verfahrens gemäß der vorliegenden Erfindung eingerichtet ist, ein maschinenlesbares Speichermedium mit einem Computerprogramm gemäß der vorliegenden Erfindung sowie ein mobiles Rechengerät mit einem Computerprogramm gemäß der vorliegenden Erfindung.

### Stand der Technik

Moderne Heizsysteme bzw. Systeme zur Gebäudeautomatisierung erlauben es, eine Heizung einer Wohnung in Abhängigkeit von der Anwesenheit des Bewohners zu betreiben. Um Energie zu sparen, wird eine Wohnung bevorzugt nur dann beheizt, wenn der Bewohner anwesend ist. Typischerweise wird die Anwesenheit des Bewohners erkannt, wenn sich sein Smartphone in das WLAN-Netzwerk der Wohnung eingewählt hat oder ein GPS-Empfänger des Smartphones eine Position erfasst, die hinreichend nah an der Wohnung ist. Solche anwesenheitsbasierten Steuerungen haben den Nachteil, dass der Bewohner in einer kalte Wohnung ankommen kann, die erst nach seiner Ankunft beheizt wird. US 2017/285596 A1 zeigt ein Verfahren zur Steuerung von Haushaltsgeräten, welches auf Grundlage von erwarteten Reisen von einem oder mehreren Nutzern die Haushaltsgeräte ansteuert.

### Offenbarung der Erfindung

### Vorteile

Die Erfindung ist im beigefügten Anspruchssatz beschrieben.

Die Erfindung hat den Vorteil, dass durch die Vorhersage der Ankunftszeit und Zielorts das Heizsystem rechtzeitig vor einer Ankunft in Betrieb genommen werden kann. Gemäß der vorliegenden Erfindung wird ein Zeitprogramm des Heizsystems bzw. eines Systems zur Hausautomation eingestellt. Beispielsweise kann das Zeitprogramm so eingestellt sein, dass das Heizsystem an Werktagen ab einer bestimmten Uhrzeit eine Raumtemperatur erhöht, weil zu dieser Uhrzeit üblicherweise die Bewohner von der Arbeit zurückkommen. Wird nun durch das Verfahren eine vor oder nach dieser Uhrzeit liegenden Ankunftszeit vorhergesagt, kann das Zeitprogramm entsprechend angepasst werden, insbesondere kann die Uhrzeit, ab der das Heizsystem eine höhere Raumtemperatur bereitstellt, auf die ermittelte Ankunftszeit geändert werden.

Unter "Heizsystem" ist insbesondere ein System aus mindestens einem Gerät zur Erzeugung von Wärmeenergie und/oder zum Empfangen von Wärmeenergie zu verstehen, insbesondere ein Heizgerät bzw. Heizbrenner, beispielsweise ein Brennwertkessel, insbesondere zur Verwendung in einer Gebäudeheizung und/oder zur Warmwassererzeugung, bevorzugt durch das Verbrennen von einem gasförmigen oder flüssigen Brennstoff oder durch elektrisches Heizen. Ein Heizsystem kann auch aus mehreren solchen Geräten zur Erzeugung von Wärmeenergie sowie weiteren, den Heizbetrieb unterstützenden Vorrichtungen, wie etwa einem Wasser- oder Brennstoffspeicher oder einer Wasser- oder Brennstoffpumpe oder einem Ausdehnungsgefäß, bestehen.

Unter "System zur Hausautomation" oder "Smart Home System" ist insbesondere ein System zur automatischen oder wenigstens teilautomatischen Durchführung und/oder Steuerung und/oder Regelung von Funktionsabläufen in einem Gebäude zu verstehen, insbesondere von Wohnhäusern, insbesondere nach vorgegebenen Einstellparametern. Insbesondere umfasst ein System zur Hausautomation die Steuerung und/oder Regelung von Funktionsabläufen der Gebäudesicherheit bzw. Gebäudeüberwachung und/oder des Energiemanagements und/oder der Gebäudeheizung und/oder der Warmwasserversorgung und/oder der Beleuchtung und/oder von Haushaltsgeräten und/oder von Unterhaltungselektronik. Ein System zur Hausautomation kann beispielsweise ein Heizsystem und/oder ein Beleuchtungssystem umfassen. Insbesondere sind die Vorrichtungen eines Systems zur Hausautomation, beispielsweise Sensoren, Aktoren, Bedienelemente, Verbraucher und sonstige technische Einheiten, miteinander vernetzt. Ein System zur Hausautomation ist oft zur Kommunikation bzw. zum Datenaustausch mit einem entfernten, bevorzugt mobilen Rechengerät eingerichtet, beispielsweise über das Internet, insbesondere durch eine Cloud. Auf diese Weise können Funktionsabläufe im Gebäude ferngesteuert werden, beispielsweise eine gewünschte Raumtemperatur eingestellt werden. Es kann auch möglich sein, Informationen aus dem Gebäude zu empfangen, beispielsweise eine Aufnahme einer Überwachungskamera oder eine gemessene Raumtemperatur. Mit "Smart Home System" ist manchmal ein System zur Hausautomation gemeint, bei dem eine intelligente Steuerung im Vordergrund steht, beispielsweise durch selbstlernende Algorithmen.

Unter "Zeitprogramm" soll insbesondere ein einstellbarer Ablaufplan von Funktion und/oder Parametern eines Heizsystems und/oder eines Systems zur Hausautomation verstanden werden. Das Heizsystem bzw. das System zur Hausautomation werden in Abhängigkeit vom Zeitprogramm betrieben, so dass die im Zeitprogramm festgelegten Funktionen und/oder Parameter zu den festgelegten Zeiten möglichst durchgeführt bzw. angenommen werden. Beispielsweise kann in einem Zeitprogramm gespeichert sein, welche Raumtemperatur bei welcher Uhrzeit gewünscht ist. Auf diese Weise kann zum Beispiel tagsüber, wenn voraussichtlich keine Bewohner im Gebäude anwesend sind, die Raumtemperatur abgesenkt werden. Auf diese Weise kann Heizenergie eingespart werden.

Unter "Rechengerät" ist insbesondere eine Vorrichtung zu verstehen, die dazu eingerichtet ist, zumindest Teile des Verfahrens gemäß der vorliegenden Erfindung durchzuführen. Insbesondere kann das Rechengerät einen Datenspeicher, eine Recheneinheit und Mittel zum Empfangen und/oder Erfassen von Standortdaten bzw. von einer Standortkoordinate sowie Mittel zum Senden von Daten an das Heizsystem bzw. an ein System zur Hausautomation umfassen. Bevorzugt ist das Rechengerät dazu eingerichtet, in Abhängigkeit von der bisher zurückgelegten Teilroute wenigstens die Ankunftszeit und den Zielort vorherzusagen, bevorzugt eine erwartete Route zu ermitteln, wobei die erwartete Route eine Vorhersage eines weiteren Verlaufs einer bisher zurückgelegten Teilroute darstellt. Beispiele für Rechengeräte sind PCs, Smartphones, Server oder Raumbedieneinheiten für Heizsysteme und/oder Systeme zur Hausautomation.

Ein "mobiles Rechengerät" ist ein Rechengerät, welches insbesondere dazu vorgesehen ist, von einem Benutzer tragbar zu sein und an verschiedenen Orten, bevorzugt beliebigen Orten, einsetzbar zu sein. Beispiele für mobile Recheneinheiten sind Smartphones, Tablets, Smart Watches oder Notebooks.

Unter "Vorhersage der Ankunftszeit und des Zielorts" ist insbesondere das Ermitteln einer in Abhängigkeit von vorliegenden Information wahrscheinlichsten Ankunftszeit und eines in Abhängigkeit von vorliegenden Informationen wahrscheinlichsten Zielorts zu verstehen.

Eine "Teilroute" ist eine noch nicht vollständig zurückgelegte Route. Die Teilroute beschreibt einen Weg von einem Startort zu einem aktuellen Standort. Eine "Route" beschreibt den Weg von einem Startort zu einem Zielort. Eine Route setzt sich wenigstens aus Ortsinformationen zusammen, welche den Weg wenigstens näherungsweise beschreiben. Eine Route kann sich beispielsweise aus diskreten Ortskoordinaten, beispielsweise GPS-Koordinaten, zusammensetzen, welche entlang des Weges liegen.

Durch die in den Unteransprüchen aufgeführten Merkmale sind vorteilhafte Weiterbildungen des erfindungsgemäßen Verfahrens möglich.

Erfindungsgemäß umfasst das Verfahren die Schritte
- Ermitteln einer Standortkoordinate
- Ermitteln einer Standortzelle eines geodätischen Netzes in Abhängigkeit von der Standortkoordinate,
- Ermitteln einer erwarteten Route in Abhängigkeit von der Standortzelle, wobei die erwartete Route eine Vorhersage der Ankunftszeit und des Zielorts umfasst,
- Einstellen des Zeitprogramms in Abhängigkeit von der erwarteten Route, insbesondere in Abhängigkeit von der von der erwarteten Route abhängigen Ankunftszeit.

Das Ermitteln der Standortzelle aus der Standortkoordinate hat den Vorteil, dass das Verfahren vereinfacht wird. Die Standortzelle ist schnell, sicher und einfach aus der Standortkoordinate bestimmbar. Die Standortzelle hat einen geringeren Informationsgehalt bzw. eine geringere Datenmenge als die Standortkoordinate und kann bei der Ermittlung der erwarteten Route schneller bzw. mit einem geringeren Rechenaufwand berücksichtigt bzw. verarbeitet werden. Auf diese Weise ist das Verfahren auch auf Rechengeräten mit geringer Rechenleistung durchführbar, beispielsweise auf mobilen Rechengeräten. Insbesondere ist es nicht notwendig, das Verfahren oder Teile des Verfahrens auf externen Rechengeräte durchzuführen, beispielsweise auf einer Cloud oder auf einem Server.

Dass das Verfahren weitgehend vollständig auf einem bevorzugt mobilen Rechengerät des Benutzers durchführbar ist, hat den zusätzlichen Vorteil, dass zur Durchführung des Verfahrens keine persönlichen Standortdaten und/oder Bewegungsdaten versendet bzw. weitergegeben werden müssen. Auf diese Weise wird eine Privatsphäre des Benutzers geschützt.

Die Verwendung eines geodätischen Netzes zur Ermittlung der Standortzelle hat den Vorteil, dass keine Kartendaten notwendig sind. Es wird kein Speicherplatz für Kartendaten benötigt. Es ist insbesondere nicht notwendig, Kartendaten auf einem mobilen Rechengerät, insbesondere Smartphone zu empfangen.

Das Verfahren wird weiter verbessert durch die Schritte
- Ermitteln einer erwarteten Route in Abhängigkeit von historischen Routendaten (34), wobei die erwartete Route (28) eine Vorhersage der Ankunftszeit (52) und des Zielorts (50) umfasst und die historischen Routendaten (34) durch früher abgespeicherte historische Routen (42) gebildet werden,
- Einstellen des Zeitprogramms in Abhängigkeit von der erwarteten Route, insbesondere in Abhängigkeit von der von der erwarteten Route abhängigen Ankunftszeit.

Die Verwendung von historischen Routendaten macht die Vorhersage der erwarteten Route besonders zuverlässig.

Unter "Standortkoordinate" soll eine aktuell ermittelte Ortskoordinate verstanden werden. Die Standortkoordinate beschreibt den aktuellen Standort. Eine Standortkoordinate kann eine geographische Koordinate sein, beispielsweise eine Angabe der geographischen Breite und geographischen Länge.

Unter "geodätisches Netz" ist eine Unterteilung einer gesamten Erdoberfläche oder wenigstens eines Teils der Erdoberfläche in Flächenelemente zu verstehen, wobei die Flächenelemente die gesamte Erdoberfläche bzw. den Teil der Erdoberfläche weitgehend vollständig abdecken. Bevorzugt haben die Flächenelemente eine regelmäßige Struktur, beispielsweise durch eine gitterförmige Anordnung. Besonders bevorzugt wird das geodätische Netz durch ein rechtwinkliges Gitter gebildet, beispielsweise durch Linien konstanter geographischer Breite und Linien konstanter geographischer Höhe. Ein Beispiel für ein bevorzugtes geodätisches Netz ist das Maidenhead Locator System bzw. QTH-Gittersystem.

Eine "Standortzelle" ist das Flächenelement des geodätischen Netzes, in der die Standortkoordinate liegt. Die Standortzelle repräsentiert den aktuellen Standort. Die Standortzelle wird im Maidenhead Locator System mit der Angabe eines QTH-Locators beschrieben.

Die "erwartete Route" ist eine Route und beschreibt insbesondere einen Zielort. Die erwartete Route beschreibt insbesondere den Weg von der Standortzelle bzw. von der Standortkoordinate zum Zielort. Es ist möglich, dass sich die erwartete Route aus einer Beschreibung des Wegs mit einer Zeitinformation zusammensetzt. Beispielsweise kann sich die erwartete Route aus diskreten Ortskoordinaten zusammensetzen, wobei zu jeder Ortskoordinate ein Zeitpunkt gespeichert ist. Beispielsweise kann die erwartete Route eine historische Route sein, die früher durchlaufen wurde und bei der zusammen mit der Ortskoordinaten der entsprechende Zeitpunkte ermittelt und gespeichert wurde. Auf diese Weise kann die erwartete Ankunftszeit besonders einfach aus der erwarteten Route ermittelt werden. Es ist auch denkbar, in Abhängigkeit von der erwarteten Route eine Ankunftszeit zu ermitteln, beispielsweise durch Bestimmen der noch nötigen Wegstrecke zu Zielort anhand der erwarteten Route und einer erwarteten Durchschnittsgeschwindigkeit.

Ist die eine Route, insbesondere die historische Route oder die erwartete Route, aus einer Startzelle, einer Zielzelle und dazwischen liegenden Zwischenzellen zusammengesetzt, hat das den Vorteil, dass das Verfahren weiter vereinfacht wird. Die Startzelle, Zielzelle und die dazwischen liegenden Zwischenzellen sind jeweils Zellen des geodätischen Netzes. Die Route wird durch eine Kette aus Zellen mit einer wohldefinierten Reihenfolge, beginnend mit der Startzelle und endend mit der Zielzelle, beschrieben.

Eine Route, die sich aus der Startzelle, Zielzelle und den dazwischen liegenden Zwischenzellen zusammensetzt, hat einen reduzierten Informationsgehalt bzw. eine geringere Datenmenge, insbesondere gegenüber einer Route, die sich aus hoch aufgelösten Ortskoordinaten zusammensetzt. Auf diese Weise können Routendaten durch das Verfahren schneller bzw. mit einem geringeren Rechenaufwand berücksichtigt bzw. verarbeitet werden. Insbesondere wird die Datenmenge der historischen Routendaten auf diese Weise reduziert. Das verringert den Speicherbedarf des Verfahrens. Die Zuverlässigkeit und Geschwindigkeit beim Ermitteln der erwarteten Route in Abhängigkeit von historischen Routendaten wird erhöht. Auf diese Weise wird eine Durchführbarkeit des Verfahrens auch auf Rechengeräten mit geringer Rechenleistung und/oder geringem Datenspeicherplatz weiter verbessert.

Ein zusätzlicher Vorteil ist, dass auf diese Weise sehr ähnliche Wege bzw. Wege, die sich mit einer örtlichen Abweichung unterscheiden, die kleiner ist als die Größe einer Zelle des geodätischen Netzes, der gleichen Route zugeordnet werden können. Auf diese Weise können Ungenauigkeiten beim Ermitteln der Standortkoordinate und/oder beim Durchlaufen des Weges auftretende kleine Variation, beispielsweise durch ein Umfahren einer Baustelle, automatisch nicht in der Route berücksichtigt werden. Das macht das Verfahren besonders robust und zuverlässig.

Das Verfahren wird weiter verbessert, wenn wenigstens eine Zelleneigenschaft der Standortzelle ermittelt wird - beispielsweise eine Bewegungsrichtung und/oder eine Startzelle der Teilroute und/oder eine Routenrichtung der Teilroute und/oder eine Zeit, beispielsweise eine aktuelle Zeit oder einer Startzeit der Teilroute - und die erwartete Route in Abhängigkeit von der wenigstens einen Zelleneigenschaft ermittelt wird. Die Zuverlässigkeit des Verfahrens wird weiter erhöht, da die Zelleneigenschaft eine genauere Ermittlung der erwarteten Route ermöglicht. Vorteilhaft ist die Verwendung mehrerer Zelleneigenschaften, beispielsweise eine aktuelle Zeit und eine Routenrichtung.

Unter "Zelleneigenschaft" ist insbesondere eine Information zu verstehen, welche von der ermittelten Standortzelle bzw. Standortkoordinate abhängt und/oder welche von der bisher zurückgelegten Teilroute abhängt. Beispiele für eine Information, welche von der ermittelten Standortzelle bzw. Standortkoordinate abhängt sind eine mit der Standortkoordinate erfasste momentane Geschwindigkeit oder eine innerhalb der Standortzelle erfasste mittlere Geschwindigkeit oder eine momentane Bewegungsrichtung oder eine mittlere Bewegungsrichtung oder ein Zeitpunkt - insbesondere eine aktuelle Uhrzeit und/oder ein aktuell vorliegender Wochentag - an dem die Standortkoordinate ermittelt wurde oder die bisher innerhalb der Standortzelle verbrachte Zeit oder eine innerhalb der Standortzelle empfangene Wetterinformation oder Verkehrsinformation. Beispiele für eine Information, welche von der bisher zurückgelegten Route abhängt sind eine Information, die von der Startzelle abhängt oder die Startzelle oder eine Startzeit oder eine bisher benötigte Zeit zum Durchlaufen der Teilroute oder eine mittlere Bewegungsrichtung oder eine mittlere Geschwindigkeit oder eine Anzahl der bisher zurückgelegten Zellen oder eine vor der Standortzelle durchlaufene Zelle oder ein Verbindungsvektor zwischen der Standortzelle und der vor der Standortzelle durchlaufenen Zelle oder eine Wetter- oder Verkehrsinformation, welche in der Startzelle empfangen wurde.

Eine besonders vorteilhafte Zelleneigenschaft der Standortzelle ist ein Teilroutenvektor, der die Standortzelle mit der Startzelle verbindet. Auf diese Weise werden eine mittlere Bewegungsrichtung und ein Startort der bisher zurückgelegten Teilroute beim Ermitteln der erwarteten Route berücksichtigt. Das hat den Vorteil, dass zum zuverlässigen Ermitteln der erwarteten Route die vor der Standortzelle durchlaufenen Zellen der Teilroute nicht notwendig sind. Das Ermitteln in Abhängigkeit von einer Kette von Zellen ist numerisch besonders aufwendig. Eine benötigte Rechenzeit des Verfahrens steigt quadratisch mit der Anzahl von Zellen. Insbesondere wird die Durchführbarkeit des Verfahrens auf Rechengeräten mit geringer Rechenleistung und/oder geringem Datenspeicherplatz weiter verbessert.

Die Genauigkeit und Zuverlässigkeit des Verfahrens wird weiter verbessert, wenn die historischen Routen zusammen mit wenigstens einer Zelleneigenschaft von einer Startzelle und/oder einer Zielzelle und/oder wenigstens einer dazwischen liegenden Zwischenzelle in den historischen Routendaten gespeichert sind. Bevorzugt ist jede Zelle einer historischen Route zusammen mit jeweils wenigsten einer Zelleneigenschaft in den historischen Routendaten gespeichert. In den historischen Routendaten kann die gleiche historische Route - also eine Route, die sich aus den gleichen Zellen zusammensetzt - mehrfach gespeichert sein, jeweils mit einer unterschiedlichen wenigstens einen Zelleneigenschaft. Beispielsweise kann die wenigstens eine Zelleneigenschaft ein Wochentag sein. Wird eine gleiche Route jeden Tag zurückgelegt, beispielsweise ein Weg zur Arbeit, ist diese Route als historische Route mehrfach in den historischen Routendaten gespeichert, jeweils mit einem anderen Wochentag als Zelleneigenschaft. Je höher eine Anzahl von historischen Routen in den historischen Routendaten, umso höher ist eine Wahrscheinlichkeit, dass die ermittelte erwartete Route dem tatsächlichen weiteren Verlauf der Teilroute entspricht. Die Qualität der ermittelten Teilroute wird gesteigert.

Das Verfahren wird weiter verbessert, wenn beim Ermitteln der erwarteten Route als erwartete Route die historische Route ausgewählt wird, bei der die wenigstens eine Zelleneigenschaft der Zelle der historischen Route, die der Standortzelle entspricht, eine größtmögliche Ähnlichkeit zu der wenigstens einen Zelleneigenschaft der Standortzelle aufweist. Durch die Auswahl einer schon bekannten bzw. abgespeicherten historischen Route als erwartete Route wird das Verfahren besonders schnell und robust. Insbesondere bei sich häufig widerholenden Routen ist das Verfahren besonders sicher und effizient ausführbar.

Insbesondere wird durch das Verfahren in den historischen Routendaten nur jeweils die Zelle einer historischen Route berücksichtigt, die der Standortzelle entspricht. Es ist nicht notwendig, die anderen Zellen einer historischen Route bei der Auswahl der erwarteten Route zu berücksichtigen. Das macht das Verfahren besonders schnell und einfach.

Eine "größtmögliche Ähnlichkeit" von der wenigstens einen Zelleneigenschaft der Standortzelle zu der wenigstens einen Zelleneigenschaft der Zelle der historischen Route, die der Standortzelle entspricht kann vorteilhaft mit einer Metrik bzw. Abstandsfunktion der wenigstens einen Zelleneigenschaft definiert bzw. ermittelt werden.

Eine besonders Vorteilhafte Realisierung des Verfahrens ist gegeben, wenn die erwartete Route durch einen k-Nearest-Neighbor-Algorithmus aus den historischen Routendaten ausgewählt wird und eine Zellenmetrik die wenigstens eine Zelleneigenschaft der Standortzelle mit der wenigstens einen Zelleneigenschaft der Zelle der historischen Route vergleicht, die der Standortzelle entspricht. Auf diese Weise lässt sich als erwartete Route die historische Route, bei der die wenigstens eine Zelleneigenschaft der Zelle der historischen Route, die der Standortzelle entspricht, eine größtmögliche Ähnlichkeit zur der wenigstens einen Zelleneigenschaft der Standortzelle aufweist, besonders schnell und genau ermitteln.

Die "Zellenmetrik" ist eine Metrik, welche zwei Informationen bzw. Werten der wenigstens einen Zelleneigenschaft eine positive Zahl zuordnet, welche umso größer ist, je stärker sich die beiden Informationen bzw. Werte unterscheiden. Sind beide Informationen bzw. Werte der wenigstens einen Zelleneigenschaft gleich, liefert die Zellenmetrik den Wert Null. Ist beispielsweise die wenigstens eine Zelleneigenschaft ein Geschwindigkeitsvektor einer momentanen Geschwindigkeit, kann die Zellenmetrik als Betrag des Differenzvektors von zwei Geschwindigkeitsvektoren sein, wobei jede Komponente des Differenzvektors eine Geschwindigkeit in Metern pro Sekunde angibt. Ist die Zelleneigenschaft eine Uhrzeit, kann die Zellenmetrik eine positive Zeitdifferenz zwischen den Uhrzeiten in Minuten sein.

Wird einer Zelle jeweils mehr als eine Zelleneigenschaft zugeordnet, kann die Zellenmetrik beispielsweise eine Summe von Metriken für jeweils eine Zelleneigenschaft sein. Wird beispielsweise jeder Zelle ein Geschwindigkeitsvektor und eine Uhrzeit zugeordnet, kann als Zellenmetrik die Summe aus einer Metrik für den Geschwindigkeitsvektor und aus einer Metrik für die Uhrzeit gewählt werden. Es ist denkbar, dass die eine Zellenmetrik bildenden einzelnen Metriken unterschiedlich stark gewichtet werden. Auf diese Weise ist es möglich, bestimmte Zelleneigenschaften stärker zu berücksichtigen als andere.

Beim "k-Nearest-Neighbor-Algorithmus" wird ein Testobjekt klassifiziert. Dem Testobjekt wird eine von wenigstens zwei vorgegebenen Klassen eine zugeordnet. Dem Testobjekt wird in Abhängigkeit von einer Menge von bereits klassifizierten Objekten und einer Metrik, die den Abstand der Objekte bestimmt, eine Klasse zugeordnet. Es wird eine Anzahl k der bereits klassifizierten Objekte bestimmt, die den kleinsten Abstand zum Testobjekt haben. Es wird überprüft, welche Klassen die k bestimmten Objekte haben. Dem Testobjekt wird die Klasse zugeordnet, die die Mehrheit der k bestimmten Objekte hat.

Im Verfahren sind die Klassen des k-Nearest-Neighbor-Algorithmus in bevorzugten Ausführungsformen die möglichen Routen, jeweils zusammengesetzt aus Startzelle, Zielzelle und Zwischenzellen. Es werden alle historischen Routen der historischen Routendaten zur Definition der Klassen verwenden. Die in den historischen Routendaten zusammen mit den historischen Routen gespeicherten Zelleneigenschaften werden nicht zum Klassifizieren bzw. zur Definition einer Klasse verwendet. In alternativen Ausführungsformen definieren die Zielzellen die Klassen. Es werden alle in den historischen Routendaten vorkommenden Zielzellen als Klassen verwendet.

Es ist auch denkbar, dass nur ein Teil einer Kette von Zellen einer historischen Route als Klasse verwendet wird, insbesondere in Abhängigkeit von der ermittelten Standortzelle. Vorteilhaft weist der Teil der Kette von Zellen nur solche Zellen auf, die nach einer Zelle angeordnet sind, die der Standortzelle entspricht. Bei einer solchen vorteilhaften Variante werden als Klasse gekürzte historische Routen verwendet, bei denen die vor einer Zelle, die der Standortzelle entspricht, liegenden Zellen entfernt sind.

Im Verfahren ist die Metrik des k-Nearest-Neighbor-Algorithmus die Zellenmetrik. Das Testobjekt des k-Nearest-Neighbor-Algorithmus ist die wenigstens eine Zelleneigenschaft der Standortzelle. Die bereits klassifizierten Objekte werden jeweils durch eine historische Route - als zugeordnete Klasse - in Verbindung mit der zusammen mit ihr abgespeicherten wenigstens eine Zelleneigenschaft der Zelle der historischen Route, die der Standortzelle entspricht, gebildet.

Werden die historischen Routendaten nach Zielerreichung in Abhängigkeit von der beendeten Route aktualisiert, wird insbesondere die beendete Route, bevorzugt zusammen mit der wenigstens einen Zelleneigenschaft, in den historischen Routendaten abgespeichert, hat das den Vorteil, dass die Qualität der ermittelten erwarteten Route weiter erhöht wird. Die Wahrscheinlichkeit, dass die erwartete Route einer tatsächlichen Route entspricht, wird gesteigert. Durch das Aktualisieren der historischen Routendaten können insbesondere neue Routen, insbesondere Zielorte bzw. Zielzellen, des Bewohners gelernt und durch das Verfahren berücksichtigt werden.

Unter "Aktualisieren der historischen Routendaten" soll insbesondere verstanden werden, dass beendete Routen in den historischen Routendaten abgespeichert werden, bevorzugt zusammen mit der wenigstens einen Zelleneigenschaft, und/oder dass historische Routen, die innerhalb einer vorgegebenen Zeitspanne, beispielsweise innerhalb von einem Jahr, nicht mehr durchlaufen wurden, aus den historischen Routendaten entfernt werden. Es ist auch denkbar, dass historische Routen mit einem Zielort bzw. einer Zielzelle, der bzw. die innerhalb einer vorgegebenen Zeitspanne nicht mehr erreicht wurde, aus den historischen Routendaten entfernt werden. Auf diese Weise werden nicht mehr relevante historische Routen nicht mehr berücksichtigt. Die Qualität und Genauigkeit des Verfahrens wird weiter verbessert.

Ein weiterer Aspekt der vorliegenden Erfindung ist ein Computerprogramm, welches dazu eingerichtet ist, eine Ausführungsform des Verfahrens gemäß der vorliegenden Erfindung auszuführen. Insbesondere veranlasst das Computerprogramm ein Rechengerät, eine Ausführungsform des Verfahrens gemäß der vorliegenden Erfindung durchzuführen, wenn es auf dem Rechengerät ausgeführt wird.

Ein weiterer Aspekt der vorliegenden Erfindung ist ein maschinenlesbares Speichermedium. Auf dem maschinenlesbaren Speichermedium ist das Computerprogramm gemäß der vorliegenden Erfindung gespeichert.

Eine weitere vorteilhafte Ausführungsform der Erfindung manifestiert sich in einem mobilen Rechengerät, insbesondere Smartphone, mit einem Sensor zur Erfassung einer Standortkoordinate - beispielsweise einem GPS-Modul - und/oder einem Empfänger zum Empfangen einer Standortkoordinate - beispielsweise ein Mobilfunkmodem - und einem Sender zum Senden von Daten an ein Heizsystem und/oder ein Systems zur Hausautomation - beispielsweise ein Mobilfunkmoden, wobei das mobile Rechengerät durch eine entsprechende integrierte Schaltung und/oder ein auf einem Speicher gespeichertes Computerprogramm dazu eingerichtet ist, ein Verfahren gemäß der vorstehenden Ausführungen auszuführen.

### Zeichnungen

In den Zeichnungen sind Ausführungsbeispiele des Verfahrens zum Einstellen eines Zeitprogramms gemäß der vorliegenden Erfindung sowie ein mobiles Rechengerät gemäß der vorliegenden Erfindung dargestellt und in der nachfolgenden Beschreibung näher erläutert. Es zeigen
Figur 1 zeigt das Verfahren zum Einstellen eines Zeitprogramms gemäß der vorliegenden Erfindung,
Figur 2 ein geodätisches Netz mit einer Teilroute und einer erwarteten Route,
Figur 3 eine schematische Darstellung von historischen Routendaten,
Figuren 4a und 4b ein Zeitprogramm eines Heizsystems jeweils vor und nach der Einstellung durch das Verfahren und
Figur 5 ein mobiles Rechengerät gemäß der vorliegenden Erfindung mit dem Heizsystem.

### Beschreibung

In den verschiedenen Ausführungsvarianten erhalten gleiche Teile bzw. Schritte die gleichen Bezugszahlen.

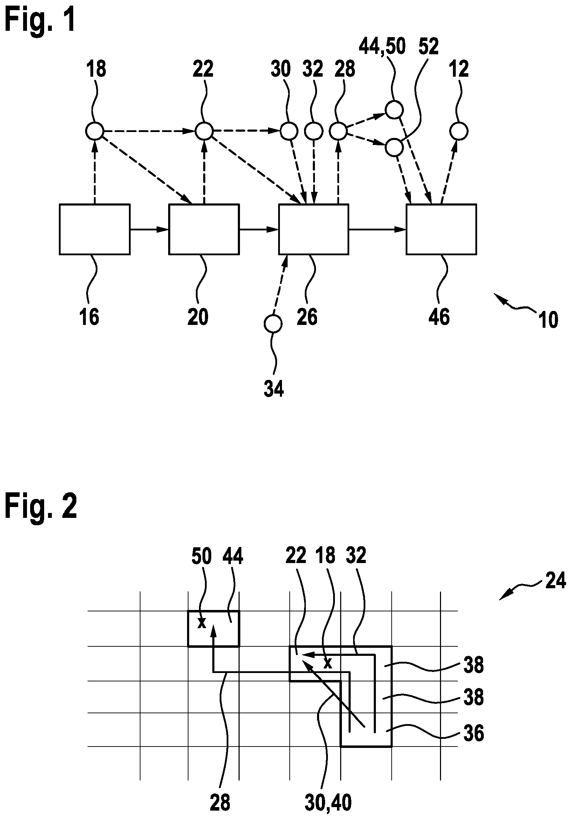

In Figur 1 ist ein Verfahren 10 zum Einstellen eines Zeitprogramms 12 eines Heizsystems 14 dargestellt. In einem ersten Schritt 16 wird eine Standortkoordinate 18 ermittelt. Im Ausführungsbeispiel wird die Standortkoordinate 18 durch ein GPS-Modul 72 eines Smartphones 68 ermittelt.

In einem nächsten Schritt 20 wird in Abhängigkeit von der Standortkoordinate 18 eine Standortzelle 22 ermittelt. Die Standortzelle 22 ist eine Zelle eines geodätischen Netzes 24, welches durch das Maidenhead Locator System definiert ist.

Figur 2 zeigt das geodätische Netz 24. Im Ausführungsbeispiel wird ein Maidenhead Locator System vierter Stufe verwendet, bei dem zur Beschreibung der Zellen achtstellig QTH-Locatoren verwendet werden. Die Zellen haben in Deutschland eine Diagonale mit einer Länge von etwa 700 Metern. Die Standortzelle 22 ist die Zelle, in der sich die Standortkoordinate 18 befindet. Das geodätische Netz 24 ist in einem Datenspeicher des Smartphones 68 hinterlegt. Schritt 20 wird durch das Smartphone 68 durchgeführt.

In Varianten des Ausführungsbeispiels kann auch ein Maidenhead Locator System einer anderen Stufe verwendet werden. Beispielsweise kann ein Maidenhead Locator System fünfter Stufe verwendet, bei dem zur Beschreibung der Zellen zehnstellige QTH-Locatoren verwendet werden. Die Zellen haben in Deutschland eine Diagonale mit einer Länge von etwa 30 Metern.

In einem weiteren Schritt 26 wird eine erwartete Route 28 ermittelt. Die erwartete Route 28 wird in Abhängigkeit von der Standortzelle 22, von drei Zelleneigenschaften 30, von einer bisher zurückgelegten Teilroute 32 und von historischen Routendaten 34 bestimmt.

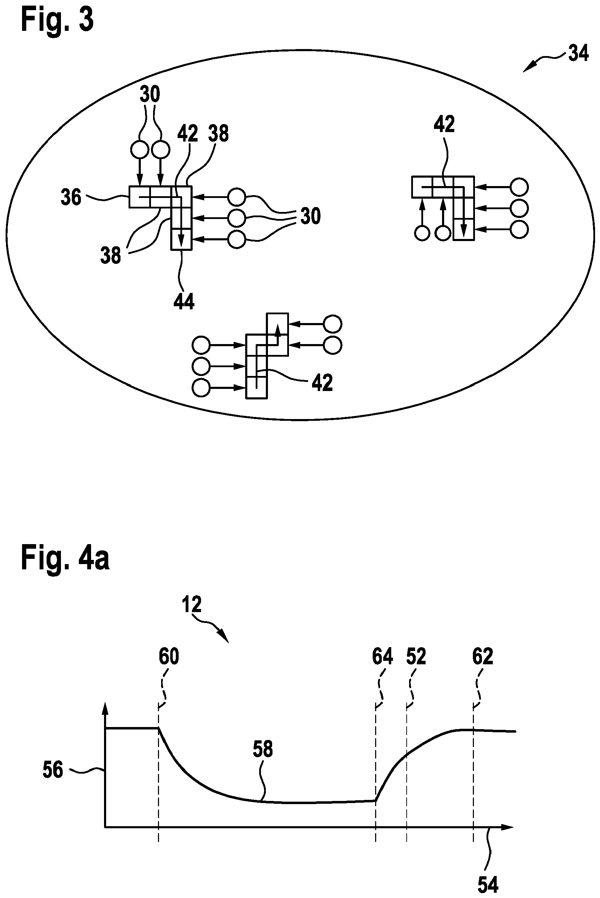

Die bisher zurückgelegte Teilroute 32 setzt sich im in Figur 2 gezeigten Beispiel aus einer Startzelle 36, zwei Zwischenzellen 38 und der Standortzelle 22 zusammen. In den Figuren 2 und 3 werden die Routen, insbesondere die Teilroute 32, die erwartete Route 28 und die historischen Routen 42, jeweils mit einem Pfeil dargestellt, welcher die Zellen verbindet, aus denen sich die Route zusammensetzt. Die Teilroute 32 ist im Datenspeicher des Smartphones 68 hinterlegt. Beginnend mit einem Start der Teilroute wird durch das Smartphone 68 periodisch eine aktuelle Standortkoordinate 18 und die aktuelle Standortzelle 22 ermittelt. Im Ausführungsbeispiel wird die aktuelle Standortkoordinate 18 alle 30 bis 60 Sekunden ermittelt. Eine Häufigkeit der Ermittlung der Standortkoordinate 18 kann dynamisch an eine mittlere Geschwindigkeit angepasst werden, insbesondere kann die Standortkoordinate 18 umso häufiger ermittelt werden, je größer die mittlere Geschwindigkeit ist. Die mittlere Geschwindigkeit kann beispielsweise mit einem Beschleunigungssensor des Smartphones 68 ermittelt werden.

In alternativen Varianten wird durch das Smartphone 68 regelmäßig, beispielsweise weniger als alle 60 Sekunden, bevorzugt weniger als alle 30 Sekunden, besonders bevorzugt weniger als alle 10 Sekunden, eine aktuelle Standortkoordinate 18 und die aktuelle Standortzelle 22 ermittelt. Die Wahl der Häufigkeit der Ermittlung der Standortkoordinate 18 richtet sich an den technischen Anforderungen. Ein häufiges Ermitteln der Standortkoordinate 18 - insbesondere über das GPS-Modul 72 - erhöht einen Energieverbrauch des Smartphones 68. Ein seltenes Ermitteln der Standortkoordinate 18 senkt die Präzision bei der Ermittlung der Standortzelle 22 und eine Vorhersagequalität des Verfahrens 10.

Die bisher zurückgelegte Teilroute 32 wird als Abfolge von nacheinander betretenen Zellen gespeichert. Sobald sich eine erfasste Standortkoordinate 18 außerhalb der bisherigen Standortzelle 22 befindet, wird die bisherige Standortzelle 22 als Zwischenzelle 38 oder, falls es die erste Zelle der Teilroute 32 war, als Startzelle 36 kategorisiert und gespeichert. Die Zelle, in der sich die erfasste Standortkoordinate 18 befindet, wird als neue, aktuelle Standortzelle 22 erfasst. Auf dieses Weise wird die Teilroute 32 iterativ ermittelt und im Smartphone 68 gespeichert.

Im Ausführungsbeispiel sind die drei Zelleneigenschaften 30 der Standortzelle 22 ein Teilroutenvektor 40 (siehe Figur 2), ein vorliegender Wochentag und eine Uhrzeit, bei der die Standortzelle 22 erstmals ermittelt wurde.

In Varianten des Ausführungsbeispiels wird als Zelleneigenschaft 30 ein erster Richtungsvektor verwendet, der die Standortzelle 22 mit der letzten Zwischenzelle 38 verbindet bzw. mit der Zwischenzelle 38, die vor dem Betreten der aktuellen Standortzelle 22 durchlaufen wurde.

In einer weiteren Variante wird, sobald wenigstens drei Zwischenzellen 38 vorhanden sind, als Zelleneigenschaft 30 ein zweiter Richtungsvektor verwendet, der die Standortzelle 22 mit der drittletzten Zwischenzelle 38 verbindet.

In einer weiteren Variante des Ausführungsbeispiels wird, sobald wenigstens fünf Zwischenzellen 38 vorhanden sind, als Zelleneigenschaft 30 ein dritter Richtungsvektor verwendet, der die Standortzelle 22 mit der fünftletzten Zwischenzelle 38 verbindet.

Die historischen Routendaten 34 werden aus historischen Routen 42 gebildet. Die historischen Routendaten 34 sind schematisch in Figur 3 abgebildet. Jede historische Route 42 setzt sich jeweils aus einer Startzelle 36, aus einer Zielzelle 44 und optional aus wenigstens einer Zwischenzelle 38 zusammen. In den historischen Routendaten 34 sind zu jeder historischen Route die Zelleneigenschaften 30 gespeichert. Zu jeder Zelle einer historischen Route 42 sind jeweils die Zelleneigenschaften 30 gespeichert. Die historischen Routendaten 34 sind im Datenspeicher des Smartphone 68 gespeichert.

Die erwartete Route 28 wird ermittelt, in dem als erwartete Route 28 eine historische Route 42 aus den historischen Routendaten 34 ausgewählt wird, welche von einem k-Nearest-Neighbor-Algorithmus ermittelt wird. Der k-Nearest-Neighbor-Algorithmus verwendet eine Zellenmetrik, die die Zelleneigenschaften der Standortzelle 22 mit den Zelleneigenschaften der Zelle einer historischen Route 42 vergleicht, die der Standortzelle 22 entspricht. Bei der Auswahl durch den k-Nearest-Neigbor-Algorithmus werden nur diejenigen historischen Routen 42 berücksichtigt, welche eine Zelle aufweisen, die der Standortzelle 22 entspricht.

Im Ausführungsbeispiel wird im k-Nearest-Neigbor-Algorithmus ein Parameter k mit dem Wert 7 verwendet. Es werden also diejenigen 7 Paare aus historischen Routen 42 und zugehörigen Zelleneigenschaften 30 (siehe Figur 3) zur Klassifizierung der Standortzelle 22 bzw. der bisher zurückgelegten Route verwendet, die die größte Ähnlichkeit zu den Zelleneigenschaften 30 der Standortzelle 22 haben. In alternativen Ausführungsformen liegt der Parameter k zwischen 5 und 11, bevorzugt zwischen 3 und 13. Bevorzugt ist der Paramater k eine ungerade Zahl, so dass immer eine Mehrheitsentscheidung möglich ist. Es ist denkbar, dass der Parameter k in Abhängigkeit von der Größe der historischen Routendaten 34 gewählt wird. Beispielsweise kann der Parameter k umso größer gewählt werden, je größer die Anzahl der historischen Routendaten 34 ist. Das Ermitteln der erwarteten Route 28 wird auf dem Smartphone 68 durchgeführt.

In weiteren Ausführungsvarianten wird der Parameter k adaptiv gewählt. Als Minimalwert hat der Parameter k den Wert 5. Je mehr historische Routen 42 es gibt, die der Teilroute 32 ähnlich sind, umso größer wird der Parameter k gewählt. Als Maximalwert hat der Parameter k den Wert 11. In einer bevorzugten Ausführungsvariante wird die Ähnlichkeit der historischen Routen 42 zur Teilroute 32 ermittelt, indem mit der Zellenmetrik der Abstand der Standortzelle 22 mit der Zelle der historischen Route 42, die der Standortzelle 22 entspricht, ermittelt wird. Je größer die Zahl der historischen Routen 42, die einen vorgegebenen Maximalabstand zur Teilroute 22 unterschreiten, umso größer wird der Parameter k gewählt.

In Schritt 26 werden ein erwarteter Zielort 50 und eine erwartete Ankunftszeit 52 ermittelt. Der erwartete Zielort 50 wird anhand von der Zielzelle 44 der erwarteten Route 28 bestimmt. Im Ausführungsbeispiel wird der Zielort 50 durch die Zielzelle 44 der erwarteten Route 28 beschrieben. Die erwartete Ankunftszeit 52 wird in Abhängigkeit von der erwarteten Route 28 ermittelt. Im Ausführungsbeispiel wird die Ankunftszeit 52 in Abhängigkeit der Uhrzeit ermittelt, welche als Zelleneigenschaft 30 der erwarteten Routen 28 in den historischen Routendaten gespeichert wird. Es wird eine Restroutendauer als die zeitliche Differenz zwischen der Uhrzeit der Zielzelle 44 der erwarteten Route 28 und der Uhrzeit der Zelle der erwarteten Route 28, welche der Standortzelle 22 entspricht, ermittelt. Die Ankunftszeit 52 wird ermittelt, indem die Restroutendauer auf die Uhrzeit der Standortzelle 22 addiert wird.

In einem weiteren Schritt 46 wird das Zeitprogramm 12 des Heizsystems 14 eingestellt. Dazu wird zunächst überprüft, ob der erwartete Zielort 50 der erwarteten Route 28 einem Wohnort entspricht, an dem das Heizsystem 14 installiert ist. Das Zeitprogramm 12 des Heizsystems 14 wird im Ausführungsbeispiel eingestellt bzw. aktualisiert, wenn sich der Wohnort innerhalb von der Zielzelle 44 der erwarteten Route 28 befindet. Insbesondere kann ein neuer Zeitpunkt zum Einschalten einer Heizung eines Raums eingestellt werden.

Figur 4a zeigt das Zeitprogramm 12 des Heizsystems 14. Eine Abszissenachse 54 zeigt eine Uhrzeit an. Eine Ordinatenachse 56 zeigt eine vorgesehene Raumtemperatur 58 an. Ab einer vorgesehenen Abfahrtszeit 60 wird eine Heizung eines Raumes abgeschaltet, so dass die vorgesehene Raumtemperatur 58 absinkt. Ab der vorgesehenen Abfahrtszeit 60 befinden sich voraussichtlich keine Bewohner im Raum. Ab einer vorgesehenen Ankunftszeit 62 wird voraussichtlich wenigstens ein Bewohner in den Raum zurückkehren. Das Heizsystem 14 wird die Heizung des Raums zu einer Heizzeit 64 einschalten, so dass der Raum zur vorhergesehenen Ankunftszeit 62 die gewünschte Raumtemperatur hat. Die Heizzeit 64 wird ermittelt, indem eine Aufheizdauer von der vorgesehen Ankunftszeit 62 abgezogen wird. Die Aufheizdauer ist ein empirisch ermittelter Wert, der in einer Steuereinheit des Heizsystems 14 gespeichert ist.

Das Zeitprogramm 12 ist im Datenspeicher des Smartphones 68 hinterlegt. Es wird regelmäßig vom Heizsystem 14 an das Smartphone 68 übermittelt. Wird eine Ankunftszeit 52 ermittelt, die hinreichend stark von der im Zeitprogramm 12 eingestellten vorgesehenen Ankunftszeit 62 abweicht, wird das Zeitprogramm 12 geändert, indem die Heizzeit 64 verändert wird. Die neue Heizzeit 64 wird ermittelt, indem von der ermittelten Ankunftszeit 52 die Aufheizdauer abgezogen wird. Im neu ermittelten Zeitprogramm 12 wird die vorgesehene Ankunftszeit 62 auf den Wert der ermittelten Ankunftszeit 52 eingestellt.

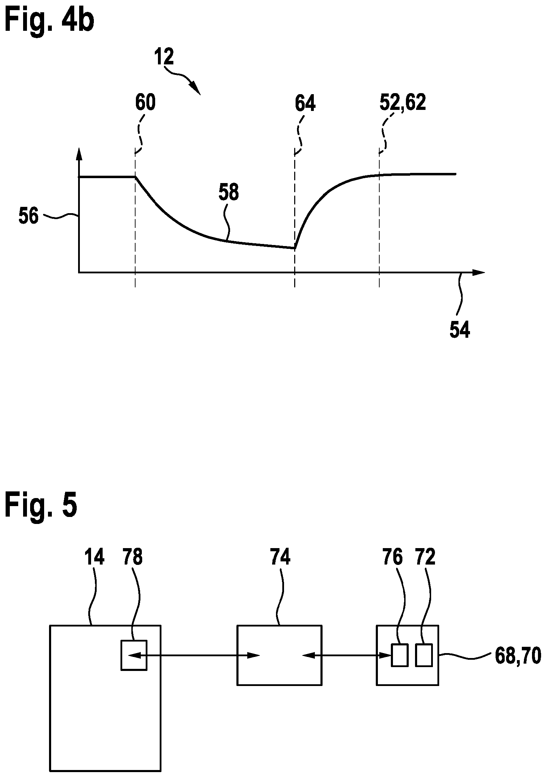

Figur 4b zeigt ein neu ermitteltes Zeitprogramm 12. Das neu ermittelte Zeitprogramm 12 wird vom Smartphone 68 an das Heizsystem 14 übermittelt. Das Heizsystem 14 regelt die Raumtemperatur dann in Abhängigkeit vom neu ermittelten Zeitprogramm 12. Liegt insbesondere die neu ermittelte Heizzeit 64 in der Vergangenheit, beginnt das Heizsystem 14 weitgehend sofort mit dem Aufheizen des Raums.

Wird die Route beendet, wird sie im Ausführungsbeispiel zusammen mit den Zelleneigenschaften 30 ihrer Zellen als historische Route 42 in den historischen Routendaten 34 gespeichert.

Die zurückgelegte Route ist beendet, sobald ein Zielort 50 bzw. eine Zielzelle 44 erreicht wurde. Im Ausführungsbeispiel wird eine bisher zurückgelegte Teilroute 32 zu einer beendeten Route, sobald festgestellt wird, dass die aktuelle Standortzelle 22 eine Zielzelle 44 ist. Im Ausführungsbeispiel wird anhand von zwei Kriterien überprüft, ob die aktuelle Standortzelle 22 eine Zielzelle 44 ist. Beträgt eine Zellenverweilzeit, in der sich die ermittelte Standortkoordinate 18 ununterbrochen innerhalb der gleichen Standortzelle 22 befindet, über 20 Minuten, wird die Standortzelle 22 als Zielzelle 44 klassifiziert. Beträgt die Zellenverweilzeit über 5 Minuten und ist die innerhalb der Standortzelle 22 erfasste mittlere Geschwindigkeit kleiner als 3 Meter pro Sekunde, wird die Standortzelle 22 als Zielzelle 44 klassifiziert.

In Varianten sind auch andere Grenzwerte für die Zellenverweilzeit und/oder für die mittlere Geschwindigkeit zur Klassifizierung der Standortzelle 22 als Zielzelle 44 denkbar. Insbesondere hängen die Grenzwerte für die Zellenverweilzeit und/oder für die mittlere Geschwindigkeit von den technischen Bedingungen und anderen Parametern des Verfahrens ab, beispielsweise insbesondere von der Größe der Zellen des geodätischen Netzes 24. In alternativen Ausführungsformen kann die Art und/oder Anzahl von Kriterien zur Überprüfung, ob die Standortzelle 22 eine Zielzelle 44 ist, beliebig verändert werden.

Es ist denkbar, dass zum Ermitteln, ob die bisher zurückgelegte Teilroute 32 beendet ist, die Standortzelle 22 mit aus der Vergangenheit bekannten Zielzellen 44 verglichen wird, beispielsweise mit den Zielzellen 44 der gespeicherten historischen Routen 42. Beispielsweise kann bei Standortzellen 22, die in den historischen Routendaten 34 gespeicherten Zielzellen 44 entsprechen, ein Kriterium zum Klassifizieren der Standortzelle 22 als Zielzelle 44 verändert werden, insbesondere kann das Kriterium vereinfacht werden. Insbesondere kann eine kritische Zellenverweilzeit, oberhalb der die Standortzelle 22 als Zielzelle 44 klassifiziert wird, abgesenkt werden und/oder eine kritische Geschwindigkeit, unterhalb der die Standortzelle 22 als Zielzelle 44 klassifiziert wird, erhöht werden.

Es ist möglich, dass ein Kriterium zur Überprüfung, ob die Standortzelle 22 eine Zielzelle 44 ist, von weiteren Informationen abhängt, beispielsweise von einer Verkehrsinformation für die Standortzelle 22 oder von einem Kalendereintrag.

Auf diese Weise kann beispielsweise ein Verkehrsstau berücksichtigt werden, der sonst zu einer falschen Ermittlung der Zielzelle 44 führen würde. Es ist denkbar, dass in Standortzellen 22, die einen Zielort 50 eines Termins in einem Kalender entsprechen, ein Kriterium zum Klassifizieren der Standortzelle 22 als Zielzelle 44 verändert wird, insbesondere kann das Kriterium vereinfacht werden. Es ist auch denkbar, dass in Standortzellen 22, die nicht einen Zielort 50 eines Termins in einem Kalender entsprechen, das Kriterium zum Klassifizieren der Standortzelle 22 als Zielzelle 44 erschwert wird.

In einer besonderen Variante wird alleine die Zelle, in der sich der Wohnort befindet, als Zielzelle 44 gewählt bzw. klassifiziert. Das hat den Vorteil, dass alle historischen Routen 42 den Wohnort als Zielzelle 44 bzw. als Zielort 50 haben. Auf diese Weise kann auch eine Ankunftszeit 52 am Wohnort ermittelt werden, wen zunächst ein Zwischenziel angesteuert wird. Das ermöglicht eine frühzeitige Vorhersage der Ankunftszeit 52 am Wohnort. Wird beispielsweise nach der Arbeit zunächst ein Sportstudio aufgesucht und erst danach der Wohnort, würde die Zelle, in der sich das Sportstudio befindet, in dieser besonderen Variante nur als Zwischenzelle 38 klassifiziert. In einem Verfahren 10 gemäß des Ausführungsbeispiels wäre nach Verlassen der Startzelle 36 das Sportstudio die vorhergesagte Zielzelle 44 und das Verfahren wird bis zum Ende des Aufenthalts im Sportstudio bzw. bis zum Verlassen der entsprechenden Zelle keine erwartete Ankunftszeit 52 am Wohnort ermitteln.

In einer weiteren Ausführungsform werden in einem mobilen Rechengerät, insbesondere in einem Smartphone 68 hinterlegte Bewegungsdaten, beispielsweise eine Liste von regelmäßig gespeicherten erfassten Ortskoordinaten bzw. Standortkoordinaten 18 zur Ermittlung von historischen Routen 42 verwendet. In Abhängigkeit von den Bewegungsdaten wird eine Kette von aufeinanderfolgenden Zellen des geodätischen Netzes 24 ermittelt. Anhand des Kriteriums zur Überprüfung, ob die Standortzelle 22 eine Zielzelle 44 ist, werden Zielzellen 44 der Kette von aufeinanderfolgenden Zellen bestimmt. Auf diese Weise wird in Abhängigkeit von der Kette von aufeinanderfolgenden Zellen eine Folge von historischen Routen 42 ermittelt. Das ist insbesondere von Vorteil, wenn das Verfahren 10 erstmals eingesetzt wird. Auf diese Weise kann sofort eine gute Vorhersage der erwarteten Route 28 erfolgen, da historische Routendaten 34 vorliegt, ohne dass die historischen Routendaten 34 durch ein Durchlaufen von Routen erstellt bzw. eingelernt werden muss.

Figur 5 zeigt das Heizsystem 14 und das Smartphone 68. Das Smartphone 68 ist ein mobiles Rechengerät 70. Das Smartphone 68 weist das GPS-Modul 72 auf, welches zum Ermitteln der Standortkoordinate 18 eingerichtet ist. Das Heizsystem 14 und das Smartphone 68 sind zur Kommunikation über einen Server 74 eingerichtet. Insbesondere kann das Heizsystem 14 das aktuell verwendete Zeitprogramm 12 an das Smartphone 68 senden. Das Smartphone 68 kann ein neues, insbesondere aktualisiertes Zeitprogramm 12 an das Heizsystem 14 senden, welches das Heizsystem 14 dann zur weiteren Steuerung bzw. Regelung übernimmt.

Das Smartphone 68 weist ein Mobilfunkmodem 76 auf, welches zum Herstellen einer Internetverbindung mit dem Server 74 eingerichtet ist. Das Heizsystem 14 hat ein WLAN-Modul 78, welches so eingerichtet ist, dass das Heizsystem 14 über ein Heimnetzwerk am Wohnort mit dem Server 74 über das Internet verbindbar ist.

## Patentansprüche

1. Verfahren (10) zum Einstellen eines Zeitprogramms (12) eines Heizsystems (14) und/oder eines Zeitprogramms (12) eines Systems zur Hausautomation - beispielsweise eines Smart Home Systems - durch eine Vorhersage einer Ankunftszeit (52) und eines Zielorts (50) in Abhängigkeit von einer bisher zurückgelegten Teilroute (32), insbesondere mittels eines mobilen Rechengeräts (70), umfassend die Schritte:
• Ermitteln einer Standortkoordinate (18), wobei die Standortkoordinate einen aktuellen Standort beschreibt,
• Ermitteln einer Standortzelle (22) eines geodätischen Netzes (24) in Abhängigkeit von der Standortkoordinate (18), wobei die Standortzelle den aktuellen Standort repräsentiert, und wobei die Standortzelle ein Flächenelement des geodätischen Netzes ist, in der die Standortkoordinate liegt,
• Ermitteln einer erwarteten Route (28) in Abhängigkeit von der Standortzelle (22) und von historischen Routendaten (34), wobei die erwartete Route (28) eine Vorhersage der Ankunftszeit (52) und des Zielorts (50) umfasst und die historischen Routendaten (34) durch früher abgespeicherte historische Routen (42) gebildet werden,
• Einstellen des Zeitprogramms (12) in Abhängigkeit von der erwarteten Route (28), insbesondere in Abhängigkeit von der von der erwarteten Route (28) abhängigen Ankunftszeit (52),
wobei wenigstens eine Zelleneigenschaft (30) der Standortzelle (22) ermittelt wird - beispielsweise eine Bewegungsrichtung und/oder eine Startzelle der Teilroute (32) und/oder eine Routenrichtung der Teilroute (32) und/oder eine Zeit, beispielsweise eine aktuelle Zeit oder einer Startzeit der Teilroute (32) - und die erwartete Route (28) in Abhängigkeit von der wenigstens einen Zelleneigenschaft (30) ermittelt wird, und dass
beim Ermitteln der erwarteten Route (28) als erwartete Route (28) die historische Route (42) ausgewählt wird, bei der die wenigstens eine Zelleneigenschaft (30) der Zelle der historischen Route (42), die der Standortzelle (22) entspricht, eine größtmögliche Ähnlichkeit zu der wenigstens einen Zelleneigenschaft (30) der Standortzelle (22) aufweist.

2. Verfahren (10) nach Anspruch 1, **dadurch gekennzeichnet, dass** eine Route, insbesondere die historische Route (42) oder die erwartete Route (28), aus einer Startzelle (36), einer Zielzelle (44) und dazwischen liegenden Zwischenzellen (38) zusammengesetzt ist.

3. Verfahren (10) nach einem der vorhergehenden Ansprüche, **dadurch gekennzeichnet, dass** die wenigstens eine Zelleneigenschaft (30) der Standortzelle (22) ein Teilroutenvektor (40) ist, der die Standortzelle (22) mit der Startzelle (36) verbindet.

4. Verfahren (10) nach einem der vorhergehenden Ansprüche, **dadurch gekennzeichnet, dass** die historischen Routen (42) zusammen mit wenigstens einer Zelleneigenschaft (30) von einer Startzelle (36) und/oder einer Zielzelle (44) und/oder wenigstens einer dazwischen liegenden Zwischenzelle (38) in den historischen Routendaten (34) gespeichert sind.

5. Verfahren (10) nach einem der vorhergehenden Ansprüche, **dadurch gekennzeichnet, dass** die erwartete Route (28) durch einen k-Nearest-Neighbor-Algorithmus aus den historischen Routendaten (34) ausgewählt wird und eine Zellenmetrik die wenigstens eine Zelleneigenschaft (30) der Standortzelle (22) mit der wenigstens einen Zelleneigenschaft (30) der Zelle der historischen Route (42) vergleicht, die der Standortzelle (22) entspricht.

6. Verfahren (10) nach einem der vorhergehenden Ansprüche, **dadurch gekennzeichnet, dass** die historischen Routendaten (34) nach einer Zielerreichung in Abhängigkeit von der beendeten Route aktualisiert werden, insbesondere dass die beendete Route, bevorzugt zusammen mit der wenigstens einen Zelleneigenschaft (30), in den historischen Routendaten abgespeichert wird.

7. Computerprogramm, welches dazu eingerichtet ist, alle Schritte eines Verfahrens (10) nach einem der vorhergehenden Ansprüche auszuführen.

8. Maschinenlesbares Speichermedium, auf dem das Computerprogramm nach Anspruch 7 gespeichert ist.

9. Mobiles Rechengerät (70), insbesondere Smartphone (68), mit einem Sensor zur Erfassung einer Standortkoordinate - beispielsweise einem GPS-Modul (72) - und/oder einem Empfänger zum Empfangen einer Standortkoordinate - beispielsweise ein Mobilfunkmodem (76) - und einem Sender zum Senden von Daten an ein Heizsystem (14) und/oder an ein System zur Hausautomation - beispielsweise ein Mobilfunkmoden (76), wobei das mobile Rechengerät (70) durch eine entsprechende integrierte Schaltung und/oder ein auf einem Speicher gespeichertes Computerprogramm nach Anspruch 7 dazu eingerichtet ist, ein Verfahren (10) nach einem der Ansprüche 1 bis 6 auszuführen.

## Claims

1. Method (10) for adjusting a timing program (12) for a heating system (14) and/or a timing program (12) for a system for home automation - for example a smart home system - by predicting an arrival time (52) and a destination (50) on the basis of a previously covered partial route (32), in particular by means of a mobile computing device (70), comprising the steps of:
ascertaining a location coordinate (18), wherein the location coordinate describes a current location,
ascertaining a location cell (22) of a geodetic network (24) on the basis of the location coordinate (18), wherein the location cell represents the current location, and wherein the location cell is a two-dimensional element of the geodetic network in which the location coordinate is situated,
• ascertaining an expected route (28) on the basis of the location cell (22) and of historic route data (34), wherein the expected route (28) comprises a prediction of the arrival time (52) and of the destination (50) and the historic route data (34) are formed by previously stored historic routes (42),
adjusting the timing program (12) on the basis of the expected route (28), in particular on the basis of the arrival time (52) dependent on the expected route (28) ,
wherein at least one cell property (30) of the location cell (22) is ascertained - for example a direction of movement and/or a starting cell of the partial route (32) and/or a route direction of the partial route (32) and/or a time, for example a current time or a starting time of the partial route (32) - and the expected route (28) is ascertained on the basis of the at least one cell property (30), and in that,
when ascertaining the expected route (28), the historic route (42) in which the at least one cell property (30) of the cell of the historic route (42) that corresponds to the location cell (22) has the greatest possible similarity to the at least one cell property (30) of the location cell (22) is selected as expected route (28).

2. Method (10) according to Claim 1, **characterized in that** a route, in particular the historic route (42) or the expected route (28), consists of a starting cell (36), a destination cell (44) and intermediate cells (38) situated between them.

3. Method (10) according to either of the preceding claims, **characterized in that** the at least one cell property (30) of the location cell (22) is a partial route vector (40) that links the location cell (22) to the starting cell (36).

4. Method (10) according to one of the preceding claims, **characterized in that** the historic routes (42) are stored in the historic route data (34) together with at least one cell property (30) of a starting cell (36) and/or of a destination cell (44) and/or of at least one intermediate cell (38) situated between them.

5. Method (10) according to one of the preceding claims, **characterized in that** the expected route (28) is selected from the historic route data (34) using a k-nearest-neighbour algorithm and a cell metric compares the at least one cell property (30) of the location cell (22) with the at least one cell property (30) of the cell of the historic route (42) that corresponds to the location cell (22).

6. Method (10) according to one of the preceding claims, **characterized in that** the historic route data (34) are updated following arrival at the destination on the basis of the finished route, in particular **in that** the finished route is stored in the historic route data, preferably together with the at least one cell property (30).

7. Computer program that is designed to execute all of the steps of a method (10) according to one of the preceding claims.

8. Machine-readable storage medium on which the computer program according to Claim 7 is stored.

9. Mobile computing device (70), in particular smartphone (68), having a sensor for recording a location coordinate - for example a GPS module (72) - and/or a receiver for receiving a location coordinate - for example a mobile radio modem (76) - and a transmitter for transmitting data to a heating system (14) and/or to a system for home automation - for example a mobile radio modem (76), wherein the mobile computing device (70) is designed, using an appropriate integrated circuit and/or a computer program according to Claim 7 stored in a memory, to perform a method (10) according to one of Claims 1 to 6.

## Revendications

1. Procédé (10) destiné à régler un programme horaire (12) d'un système de chauffage (14) et/ou d'un programme horaire (12) d'un système domotique, par exemple un système de maison intelligente, par prédiction d'une heure d'arrivée (52) et d'une destination (50) en fonction d'une partie d'itinéraire (32) parcourue jusqu'à présent, notamment à l'aide d'un dispositif informatique mobile (70), le procédé comprenant les étapes suivantes :
• déterminer une coordonnée de position (18), la coordonnée de position décrivant une position actuelle,
• déterminer une cellule de position (22) d'un réseau géodésique (24) en fonction de la coordonnée de position (18), la cellule de position représentant la position actuelle, et la cellule de position, dans laquelle se trouve la coordonnée de position, étant un élément de surface du réseau géodésique,
• déterminer un itinéraire attendu (28) en fonction de la cellule de position (22) et de données d'itinéraire historiques (34), l'itinéraire attendu (28) comprenant une prédiction de l'heure d'arrivée (52) et de la destination (50) et les données d'itinéraire historiques (34) étant formées par des itinéraires historiques (42) précédemment mémorisés,
• régler le programme horaire (12) en fonction de l'itinéraire attendu (28), notamment en fonction de l'heure d'arrivée (52) qui dépend de l'itinéraire attendu (28),
au moins une propriété de cellule (30) de la cellule de position (22) étant déterminée, par exemple une direction de déplacement et/ou une cellule de départ de la partie d'itinéraire (32) et/ou une direction d'itinéraire de la partie d'itinéraire (32) et/ou une heure, par exemple une heure actuelle ou une heure de départ de la partie d'itinéraire (32), et l'itinéraire attendu (28) étant déterminé en fonction de l'au moins une propriété de cellule (30), et en ce que lors de la détermination de l'itinéraire attendu (28) comme itinéraire attendu (28), l'itinéraire historique (42) est sélectionné dans lequel l'au moins une propriété de cellule (30) de la cellule de l'itinéraire historique (42), qui correspond à la cellule de position (22), présente la plus grande similitude possible avec l'au moins une propriété de cellule (30) de la cellule de position (22).

2. Procédé (10) selon la revendication 1, **caractérisé en ce qu'**un itinéraire, notamment l'itinéraire historique (42) ou l'itinéraire attendu (28), comprend une cellule de départ (36), une cellule de destination (44) et des cellules intermédiaires (38).

3. Procédé (10) selon l'une des revendications précédentes, **caractérisé en ce que** l'au moins une propriété de cellule (30) de la cellule de position (22) est un vecteur de partie d'itinéraire (40) qui relie la cellule de position (22) à la cellule de départ (36).

4. Procédé (10) selon l'une des revendications précédentes, **caractérisé en ce que** les itinéraires historiques (42) ainsi qu'au moins une propriété de cellule (30) d'une cellule de départ (36) et/ou d'une cellule de destination (44) et/ou d'au moins une cellule intermédiaire (38) située entre celle-ci sont mémorisées dans les données d'itinéraire historiques (34) .

5. Procédé (10) selon l'une des revendications précédentes, **caractérisé en ce que** l'itinéraire attendu (28) est sélectionné parmi les données d'itinéraire historique (34) par un algorithme k-Nearest-Neighbour et une métrique de cellule compare l'au moins une propriété de cellule (30) de la cellule de position (22) à au moins une propriété de cellule (30) de la cellule de l'itinéraire historique (42) qui correspond à la cellule de position (22).

6. Procédé (10) selon l'une des revendications précédentes, **caractérisé en ce que** les données d'itinéraire historique (34) sont actualisées, après qu'une destination a été atteinte, en fonction de l'itinéraire terminé, en particulier **en ce que** l'itinéraire terminé est mémorisé dans les données d'itinéraire historique, de préférence conjointement avec l'au moins une propriété de cellule (30).

7. Logiciel qui est conçu pour réaliser toutes les étapes d'un procédé (10) selon l'une des revendications précédentes.

8. Support de stockage, lisible par machine, sur lequel le logiciel selon la revendication 7 est mémorisé.

9. Dispositif informatique mobile (70), notamment smartphone (68), comprenant un capteur destiné à détecter une coordonnée de position, par exemple un module GPS (72), et/ou un récepteur destiné à recevoir une coordonnée de position, par exemple un modem cellulaire (76), et un émetteur destiné à envoyer des données à un système de chauffage (14) et/ou à un système domotique - par exemple un modem radio mobile (76) ,
le dispositif informatique mobile (70) étant conçu pour mettre en œuvre un procédé (10) selon l'une des revendications 1 à 6 par le biais d'un circuit intégré correspondant et/ou d'un logiciel selon la revendication 7 mémorisé dans une mémoire.
